# EUROPEAN PATENT APPLICATION

(11) **EP 4 841 787 A1**
(43) Date of publication of application: **18.11.2026**
(21) Application number: 25833651.0
(22) Date of filing: 03.07.2025
(51) Int. Cl.: H01M 50/411, H01M 50/451, H01M 50/46, H01M 50/426, H01M 10/0569, H01M 10/0568, C08L 27/16, C08L 29/04

(54) **BATTERY SEPARATOR AND BATTERY**

(30) Priority: 03.07.2024 KR 20240087481
(71) Applicant: LG Chem, Ltd., Seoul 07336 (KR)
(72) Inventor: KIM, Kee Yong, Seoul 07796 (KR); LEE, Kiwoong, Seoul 07796 (KR); LIM, Mun Hyuk, Seoul 07796 (KR); AHN, Jinhyeok, Seoul 07796 (KR)
(74) Representative: Hoffmann Eitle
(86) International application number: PCT/KR2025/009541
(87) International publication number: WO 2026/010407

(57) **Abstract**

The present invention relates to a battery separator and a battery. The battery separator and the battery of the present invention comprise: a substrate layer; an outer layer positioned on one surface or both surfaces of the substrate layer and comprising a first binder which is a fluorine-based binder and a second binder which is a vinyl-based binder; and an inner layer positioned between the substrate layer and the organic layer and comprising inorganic particles, wherein a ratio (P1:P2) of a first binder content (P1) of the separator to a second binder content (P2) of the separator can be controlled.

## Description

### TECHNICAL FIELD

This application claims the benefit of the priority date of Korean Patent Application No. 10-2024-0087481 filed with the Korean Intellectual Property Office on July 3, 2024, the entire contents of which are incorporated herein by reference.

The present invention relates to a battery separator.

The present invention relates to a battery.

### BACKGROUND ART

A separator may be positioned between a positive electrode and a negative electrode in a battery. A charge carrier such as a lithium ion may move through the separator. The separator may prevent physical contact between the positive electrode and the negative electrode. In the manufacturing process of a battery, an adhesive layer may attach the separator to the electrode.

A non-aqueous composition comprising a binder and an organic solvent may produce an adhesive layer by coating and drying. The technical trend tends to replace the organic solvent with an aqueous solvent in consideration of the environment.

An assembly process of a battery requires an appropriate separator level of adhesion of an adhesive layer of a separator to an electrode (electrode adhesion) and adhesion between layers constituting the separator (peel strength).

### DISCLOSURE OF INVENTION

### TECHNICAL PROBLEM

A battery separator based on an aqueous composition has difficulty improving electrode adhesion and peel strength together with other performances of the separator.

A battery according thereto also has difficulty improving or maintaining performances such as durability and electrical properties.

### SOLUTION TO PROBLEM

An embodiment of the present invention is a battery separator comprising: a substrate layer; an outer layer positioned on one surface or both surfaces of the substrate layer and comprising a first binder which is a fluorine-based binder and a second binder which is a vinyl-based binder; and an inner layer positioned between the substrate layer and the outer layer and comprising inorganic particles, wherein a ratio (P1:P2) of a first binder content (P1) of the battery separator to a second binder content (P2) of the battery separator is within a range of 0.5:1 to 5:1.

The outer layer may comprise a sea-island structure.

The first binder may form an island of the sea-island structure, and the second binder may form a sea of the sea-island structure.

A peel strength of the inner layer with respect to the substrate layer may be 125 gf/25mm or more.

The first binder may comprise a PVDF-based binder.

The first binder may comprise PVDF-HFP.

The first binder may comprise PVDF-HFP having an HFP substitution ratio of 10 wt% or less.

The first binder may be a particulate binder.

An average size of the first binder may be within a range of 100 nm to 800 nm.

The second binder may be a non-particulate binder.

The second binder may be a particulate binder.

An average size of the second binder may be within a range of 0.1 µm to 2.0 µm.

The second binder may comprise a homopolymer comprising a polymerized unit derived from a vinyl-based monomer.

The vinyl-based monomer may comprise one or more selected from the group consisting of vinyl alcohol, vinyl butyral, vinyl pyrrolidone, and vinyl acetate.

The vinyl-based monomer may comprise one or more selected from the group consisting of vinyl butyral and vinyl acetate.

The vinyl-based monomer may comprise one or more selected from the group consisting of vinyl alcohol and vinyl pyrrolidone.

The second binder may be positioned closer to the inner layer compared to the first binder.

The outer layer may not comprise inorganic particles.

An inorganic particle content of the inner layer may be 80 wt% or more.

Another embodiment of the present invention is a battery comprising: a positive electrode; a negative electrode; and a separator positioned between the positive electrode and the negative electrode, wherein the separator comprises a substrate layer; an outer layer positioned on one surface or both surfaces of the substrate layer and comprising a first binder which is a fluorine-based binder and a second binder which is a vinyl-based binder; and an inner layer positioned between the substrate layer and the organic layer and comprising inorganic particles, and a ratio (P1:P2) of a first binder content (P1) of the separator to a second binder content (P2) of the separator is within a range of 0.5:1 to 5:1.

### ADVANTAGEOUS EFFECTS OF INVENTION

The battery separator of the present invention can simultaneously exhibit high electrode adhesion, high peel strength, excellent electrolyte impregnation property, and appropriate air permeability.

The battery of the present invention can exhibit excellent durability and electrical performance.

### BRIEF DESCRIPTION OF DRAWINGS

FIG. 1 is a surface SEM photograph of Example 1. FIG. 2 is an enlarged view of FIG. 1.
FIG. 3 is a surface SEM photograph of Example 2. FIG. 4 is an enlarged view of FIG. 3.
FIG. 5 is a surface SEM photograph of Example 3. FIG. 6 is an enlarged view of FIG. 5.
FIG. 7 is a surface SEM photograph of Example 4. FIG. 8 is an enlarged view of FIG. 7.
FIG. 9 is a surface SEM photograph of Comparative Example 1. FIG. 10 is an enlarged view of FIG. 9.

### BEST MODE FOR CARRYING OUT INVENTION

This document may use ordinal numbers such as "first" and "second" while referring to a plurality of components. Here, there is no priority among the components.

In this document, a numerical range of "A to B" may mean "A or more and B or less".

In this document, the unit "um" means "micrometer".

Hereinafter, this document describes the present invention in more detail.

In this document, when a specific commercial product is used as a certain component, the properties of the component may mean the properties described in the technical data sheet (TDS) or Certification of Analysis of the product.

An embodiment of the present invention is a battery separator.

A separator may be positioned between electrodes in the separator. The separator may be positioned between a positive electrode and a negative electrode in a battery. The separator may prevent physical contact between the positive electrode and the negative electrode in the battery. A charge carrier (e.g., a metal ion such as a lithium ion) may move through the separator between the electrodes.

The battery may comprise any device that performs an electrochemical reaction.

The battery may mean any kind of primary battery, secondary battery, fuel cell, solar cell, or capacitor. In particular, the battery may mean a lithium secondary battery. The lithium secondary battery may comprise a lithium metal secondary battery, a lithium polymer secondary battery, a lithium ion polymer secondary battery, or a lithium ion secondary battery.

Among these, the lithium ion secondary battery may comprise an electrode assembly in which a plurality of unit cells comprising basic battery units are combined, and a battery case accommodating the same. The secondary battery may be classified as a pouch type, a prismatic type, a cylindrical type, or a coin type according to the shape of the battery case.

The battery separator of the present invention, as described later, may comprise an adhesive layer to increase the interlayer peel force and adhesion to the electrode. Such a battery separator may be suitable for a pouch-type secondary battery or a prismatic-type secondary battery.

An electrode assembly of a pouch-type secondary battery may typically be manufactured by a lamination-stacking method. When the peel force of the battery separator and the adhesion to the electrode are secured at an appropriate level, defects due to interlayer peeling or the like during the assembly process or during the operation process after completion can be reduced.

The battery separator comprises at least three different layers. The battery separator may comprise a substrate layer; an outer layer positioned on one surface or both surfaces of the substrate layer; and an inner layer positioned between the substrate layer and the outer layer.

The substrate layer may support the separator and impart structural stability to the separator. The substrate layer may be a porous substrate. The substrate layer may comprise a polyolefin-based polymer.

The outer layer may attach the separator and the electrode. The outer layer may be positioned on one surface of the substrate layer and on the other surface facing the one surface. The outer layer may comprise specific polymers to improve electrode adhesion and peel strength.

The outer layer may be positioned on both surfaces of the substrate layer. The composition of the outer layer positioned on each surface of the substrate layer may be the same as or different from each other.

The outer layer may comprise two or more binders of different series. The outer layer may comprise a first binder and a second binder. The first binder and the second binder may be binders of different series. The first binder may be a fluorine-based binder. The second binder may be a vinyl-based binder.

The component that mainly exhibits the adhesion of the separator may be the first binder. The second binder may mainly further increase the adhesion exhibited by the first binder.

The fluorine-based binder may comprise, as a main component, a polymerized unit derived from a fluorine-containing monomer.

The vinyl-based binder may comprise, as a main component, a polymerized unit derived from a vinyl-based monomer.

Comprising a certain component as a main component may mean that the location comprising the component comprises the component in a content of 50% or more, 60% or more, 70% or more, 80% or more, 90% or more, 95% or more, or 99% or more based on the total weight.

The inner layer may comprise inorganic particles to exhibit specific functions.

The battery separator of the present invention may have a structure in which the substrate layer, the outer layer, and the inner layer are stacked in this order, and the type of the binder(s) comprised in the outer layer and the blending ratio therebetween may be adjusted. A ratio (P1:P2) of a first binder content (P1) of the battery separator to a second binder content (P2) of the battery separator may be within a range of 0.5:1 to 5:1.

The ratio of P2 with respect to P1 may be high compared to conventional. This is different from a conventional separator using a vinyl-based binder as an additive component such as a dispersant. This is because the present invention comprises the second binder as a binder of the outer layer. The separator can simultaneously exhibit high electrode adhesion, high peel strength, excellent electrolyte impregnation property, and appropriate air permeability by combining the first binder and the second binder.

The P1:P2 may be within a range of 1:1 to 4:1, 1:1 to 4.5:1, 1:1 to 5:1, 2:1 to 4:1, 2:1 to 4.5:1, 2:1 to 5:1, 3:1 to 4:1, 3:1 to 4.5:1, 3:1 to 5:1, 4:1 to 4:1, 4:1 to 4.5:1, or 4:1 to 5:1.

An outer layer coating liquid of a specific composition may form the outer layer.

The outer layer coating liquid may be an aqueous coating liquid. The outer layer coating liquid may comprise an aqueous solvent, the first binder, and the second binder. The P1:P2 value of the outer layer coating liquid may control the P1:P2 value of the separator.

The aqueous solvent may consist of water or may be a mixture comprising water and a different component. When the aqueous solvent is a mixture comprising water and a different component, the aqueous solvent may comprise water as a main component.

When the outer layer coating liquid comprises an aqueous solvent, it may be difficult to secure sufficient electrode adhesion of the separator or to lower the electrical resistance of the separator. However, the outer layer coating liquid used in the present invention comprises a combination of specific binders and adjusts the content ratio thereof, so that the electrode adhesion of the separator can be increased and the electrical resistance of the separator can also be lowered.

An outer layer coating liquid of the aforementioned composition forms the outer layer, and the inner layer between the substrate layer and the outer layer comprises inorganic particles, so that the outer layer may exhibit a specific aspect in the separator.

The outer layer may comprise a sea-island structure. The sea-island structure may mean a structure in which an island of a dispersive phase is dispersed in a sea of a continuous phase.

When observed from the surface of the battery separator, the island may form a closed curve, and the sea may surround the island.

When observed from the side of the battery separator, the sea may be adjacent to the inner layer, and the island may be positioned on the sea in the outer layer.

A surface image of the battery separator, specifically a surface image of the outer layer, more specifically a surface SEM image of the outer layer, may show the sea-island structure. The Examples section below describes in more detail the manner of confirming the sea-island structure.

When the outer layer comprises a sea-island structure, the surface of the outer layer may form a pore structure appropriate for the movement of an electrolyte and a charge carrier. In addition, when the outer layer comprises a sea-island structure, the sea may be bonded to the inner layer, so that the adhesion between the outer layer and the inner layer may increase. In addition, when the outer layer comprises a sea-island structure, the island comprising components suitable for improving the properties of the separator is exposed on the surface of the outer layer, so that the adhesion of the surface of the outer layer to the electrode may also increase. The sea-island structure of the outer layer can improve the electrode adhesion, peel strength, air permeability, and electrical resistance of the battery separator and the performance of the battery accordingly.

Because the solubility of the binders comprised in the outer layer with respect to a specific solvent (specifically, an aqueous solvent) is different, the outer layer may comprise a sea-island structure. Specifically, when the second binder comprised in the outer layer is closer to hydrophobic than to hydrophilic, the outer layer may comprise a sea-island structure.

In the outer layer, the first binder may form an island of the sea-island structure. This may be because, when the outer layer comprises the sea-island structure, the outer layer coating liquid disperses the first binder in the aqueous solvent.

In the outer layer, the second binder may form a sea of the sea-island structure. This may be because, when the outer layer comprises the sea-island structure, the outer layer coating liquid dissolves the second binder in the aqueous solvent.

An assembly process of a battery may apply external forces in various directions to the separator, and this may affect the bonding between layers constituting the battery separator. Improving the peel strength of the battery separator is very important for smoothly proceeding with the battery assembly process and preventing assembly defects between components of the battery.

The battery separator may further improve the peel strength by comprising a specific component as the second binder in the outer layer. Specifically, the battery separator can improve a peel strength of the inner layer with respect to the substrate layer to 125 gf/25mm or more.

The peel strength [gf/25mm] of the battery separator may be 250 or less, 200 or less, 190 or less, or 180 or less.

This may be because the second binder comprised in the outer layer comprises a polar functional group, specifically a hydrophilic functional group, more specifically a hydrophilic functional group comprising an oxygen atom.

The present invention may also specifically adjust the composition of the first binder and the second binder.

The first binder may comprise a PVDF-based binder. The PVDF-based binder can increase the electrode adhesion and peel strength while maintaining the performance of the battery in the battery separator.

The PVDF-based binder may comprise one or more selected from the group consisting of poly(vinylidene fluoride-co-hexafluoropropylene) (PVDF-HFP), polyvinylidene fluoride-co-trichloroethylene (PVDF-TCE), poly(vinylidene fluoride-co-chlorotrifluoroethylene) (PVDF-CTFE), poly(vinylidene fluoride-co-tetrafluoroethylene (PVDF-TFE), and poly(vinylidene fluoride-co-trifluoroethylene (PVDF-TrFE). Preferably, the first binder may comprise poly(vinylidene fluoride-co-hexafluoropropylene) (PVDF-HFP). More preferably, an HFP substitution ratio of the PVDF-HFP comprised in the first binder may be 10 wt% or less.

The HFP substitution ratio [wt%] of the PVDF-HFP comprised in the first binder may be within a range of 0.1 to 10, 0.1 to 9, 0.1 to 8, 0.1 to 7, 0.5 to 9, 0.5 to 8, 0.5 to 7, 1 to 9, 1 to 8, 1 to 7, 2 to 8, 2 to 7, 3 to 7, 4 to 7, 5 to 7, or 6 to 7.

The first binder may form an emulsion in the outer layer coating liquid. The first binder may form an emulsion in the aqueous solvent. The first binder may be a particulate binder. The particulate binder may mean a binder in which the components thereof aggregate in a predetermined shape to have a particle structure.

The present invention can adjust the average size of the first binder so that the battery separator improves the electrode adhesion and the peel strength and exhibits appropriate performance. The average size of the first binder may be within a range of 100 nm to 800 nm.

In this document, the average size of particles may mean a value obtained by dividing the sum of the longest lengths of respective particles confirmed in an image showing the particles by the number of the particles.

The average size [nm] of the first binder may be within a range of 150 to 700, 150 to 600, 150 to 500, 150 to 450, 150 to 400, 150 to 350, 150 to 300, 200 to 600, 200 to 500, 200 to 450, 200 to 400, 200 to 350, 200 to 300, 250 to 500, 250 to 450, 250 to 400, 250 to 350, 250 to 300, 290 to 500, 290 to 450, 290 to 400, 290 to 350, or 290 to 300.

The outer layer coating liquid may dissolve the second binder. An aqueous solvent may dissolve the second binder. The second binder may be a non-particulate binder. The non-particulate binder, unlike the particulate binder, may mean a binder having a structure in which the components do not aggregate well with each other and spread in a network or net shape.

The second binder may be a non-particulate binder.

The outer layer coating liquid may not dissolve the second binder. That is, the second binder may form an emulsion in the outer layer coating liquid. The second binder may form an emulsion in the aqueous solvent. The second binder may be a particulate binder.

The present invention can further improve the electrode adhesion and the peel strength of the battery separator by adjusting the average size of the second binder. The average size of the second binder may be within a range of 0.1 µm to 2.0 µm.

The average size [µm] of the second binder may be within a range of 0.11 to 1.9, 0.11 to 1.7, 0.11 to 1.5, 0.11 to 1.3, 0.11 to 1.1, 0.11 to 1.0, 0.11 to 0.9, 0.11 to 0.7, 0.11 to 0.5, 0.13 to 1.7, 0.13 to 1.5, 0.13 to 1.3, 0.13 to 1.1, 0.13 to 1.0, 0.13 to 0.9, 0.13 to 0.7, 0.13 to 0.5, 0.15 to 1.5, 0.15 to 1.3, 0.15 to 1.1, 0.15 to 1.0, 0.15 to 0.9, 0.15 to 0.7, 0.15 to 0.5, 0.17 to 1.3, 0.17 to 1.1, 0.17 to 1.0, 0.17 to 0.9, 0.17 to 0.7, 0.17 to 0.5, 0.19 to 1.1, 0.19 to 1.0, 0.19 to 0.9, 0.19 to 0.7, 0.19 to 0.5, 0.2 to 1.0, 0.2 to 0.9, 0.2 to 0.7, or 0.2 to 0.5.

The glass transition temperature of the second binder may be 90 °C or less. It may be lower than the drying temperature of the coating liquid used in the manufacture of the battery separator. The second binder may exhibit a rubbery state in the separator. The glass transition temperature [°C] of the second binder may be within a range of 15 to 90, or 20 to 90, or 20 to 80.

In this document, the manner of measuring the glass transition temperature of a polymer may be differential scanning calorimetry (DSC) in which the measurement temperature range and the temperature increase and decrease rates are specified.

As described above, the second binder may comprise, as a main component, a polymerized unit derived from a vinyl-based monomer. In addition, the polymer comprised in the second binder may be a homopolymer of a vinyl-based monomer. That is, the second binder may comprise a homopolymer comprising a polymerized unit derived from a vinyl-based monomer.

The properties of the outer layer described above (the sea-island structure and/or the improved peel strength) may appear when a specific component is comprised as the vinyl-based monomer.

The vinyl-based monomer may comprise one or more selected from the group consisting of vinyl alcohol, vinyl butyral, vinyl pyrrolidone, and vinyl acetate.

The vinyl-based monomer may comprise one or more selected from the group consisting of vinyl butyral and vinyl acetate. In this case, the outer layer may comprise a sea-island structure.

The vinyl-based monomer may comprise one or more selected from the group consisting of vinyl alcohol and vinyl pyrrolidone. In this case, the peel strength of the battery separator comprising the outer layer may be 125 gf/25mm or more.

Vinyl alcohol comprises a hydroxyl group (-OH) in the polymerized unit. This hydroxyl group can increase the bonding strength between the outer layer and the inner layer.

When the second binder comprises a homopolymer comprising a polymerized unit derived from vinyl alcohol, the second binder may be an aqueous solution. In this case, the second binder may be a non-particulate binder in the outer layer.

When the second binder comprises a homopolymer comprising a polymerized unit derived from vinyl alcohol, the weight-average molecular weight of the second binder may be within a range of 100,000 g/mol to 300,000 g/mol. The weight-average molecular weight [×10000 g/mol] of the second binder may be within a range of 11 to 19, 11 to 18, 11 to 17, 11 to 16, 11 to 15, 12 to 18, 12 to 17, 12 to 16, 12 to 15, 13 to 17, 13 to 16, 13 to 15, 14 to 16, 14 to 15.

In this document, the manner of measuring the weight-average molecular weight of a polymer may be gel permeation chromatography based on standard polystyrene.

When the second binder comprises a homopolymer comprising a polymerized unit derived from vinyl alcohol, the glass transition temperature of the second binder may be within a range of 50 °C to 85 °C. In this case, the glass transition temperature [°C] of the second binder may be within a range of 55 to 85, 55 to 80, 55 to 75, 55 to 70, 55 to 65, 55 to 60, 60 to 80, 60 to 75, 60 to 70, or 60 to 65.

Vinyl butyral can form a sea-island structure in the outer layer, so that the air permeability and electrical resistance of the battery separator can be improved.

When the second binder comprises a homopolymer comprising a polymerized unit derived from vinyl butyral, the outer layer coating liquid may comprise the second binder as a powder binder. The second binder may be a particulate binder in the outer layer.

When the second binder comprises a homopolymer comprising a polymerized unit derived from vinyl butyral, the weight-average molecular weight of the second binder may be within a range of 10,000 g/mol to 100,000 g/mol. The weight-average molecular weight [×10000 g/mol] of the second binder may be within a range of 2 to 9, 2 to 8, 2 to 7, 2 to 6, 3 to 8, 3 to 7, 3 to 6, 4 to 7, 4 to 6, or 5 to 6.

When the second binder comprises a homopolymer comprising a polymerized unit derived from vinyl butyral, the glass transition temperature of the second binder may be within a range of 50 °C to 85 °C. In this case, the glass transition temperature [°C] of the second binder may be within a range of 5 to 80, 55 to 75, 55 to 70, 55 to 65, 55 to 60, 60 to 75, 60 to 70, or 60 to 65.

Vinyl pyrrolidone can render a polymer comprising it amphoteric. In addition, because vinyl pyrrolidone comprises oxygen in the molecule, it can further increase the bonding strength between the outer layer and the inner layer.

When the second binder comprises a homopolymer comprising a polymerized unit derived from vinyl pyrrolidone, the outer layer coating liquid may comprise the second binder as a powder binder. The second binder may be a particulate binder in the outer layer.

When the second binder comprises a homopolymer comprising a polymerized unit derived from vinyl pyrrolidone, the degree of polymerization of the second binder may be within a range of 100 to 1000. The degree of polymerization of the second binder may be 200 to 900, 200 to 800, 200 to 700, 200 to 600, 300 to 800, 300 to 700, 300 to 600, 400 to 700, 400 to 600, or 500 to 600.

In this document, the degree of polymerization of a certain polymer means a value obtained by dividing the weight-average molecular weight of the polymer by the molecular weight of the polymerized unit thereof.

When the second binder comprises a homopolymer comprising a polymerized unit derived from vinyl pyrrolidone, the glass transition temperature of the second binder may be within a range of 50 °C to 85 °C. In this case, the glass transition temperature [°C] of the second binder may be within a range of 5 to 80, 55 to 75, 55 to 70, 55 to 65, 55 to 60, 60 to 75, 60 to 70, or 60 to 65.

Vinyl acetate can form a sea-island structure in the outer layer, so that the air permeability and electrical resistance of the battery separator can be improved.

When the second binder comprises a homopolymer comprising a polymerized unit derived from vinyl acetate, the second binder may be an aqueous emulsion. In this case, the second binder may be a particulate binder in the outer layer.

When the second binder comprises a homopolymer comprising a polymerized unit derived from vinyl acetate, the average size of the second binder may be within a range of 0.1 µm to 2.0 µm. The average size [µm] of the second binder may be within a range of 0.15 to 1.5, 0.15 to 1.0, 0.15 to 0.5, 0.2 to 1.0, or 0.2 to 0.5.

When the second binder comprises a homopolymer comprising a polymerized unit derived from vinyl acetate, the weight-average molecular weight of the second binder may be within a range of 10,000 g/mol to 30 g/mol. The weight-average molecular weight [×10000 g/mol] of the second binder may be within a range of 5 to 25, 5 to 20, 5 to 15, 10 to 20, or 10 to 15.

When the second binder comprises a homopolymer comprising a polymerized unit derived from vinyl acetate, the glass transition temperature of the second binder may be within a range of 15 °C to 60 °C. The glass transition temperature [°C] of the second binder may be within a range of 20 to 55, 20 to 50, 20 to 45, 20 to 40, 25 to 50, 25 to 45, 25 to 40, 30 to 45, 30 to 40, or 35 to 40.

The inner layer may also be formed of an aqueous inner layer coating liquid like the outer layer. The inorganic particles comprised as the main component in the inner layer may also generally exhibit hydrophilicity. Therefore, in the outer layer, the second binder, which is generally hydrophilic, may be positioned more on the inner layer side, and the first binder, which is less hydrophilic, may be positioned more on the outer surface side of the outer layer. That is, the second binder may be positioned closer to the inner layer compared to the first binder. This may mean that the second binder is positioned more than the first binder in a portion of the outer layer close to the inner layer, and the first binder is positioned more than the second binder in a portion of the outer layer close to the outer surface.

As described above, the substrate layer may comprise a polyolefin-based polymer as a main component.

The polyolefin-based film may comprise the polyolefin-based polymer in an amount of 50 vol% or more, 90 vol% or more, or 95 vol% or more of the entire material constituting the polyolefin-based film.

The weight-average molecular weight of the component comprised in the polyolefin-based polymer may be 3×10⁵ to 25×10⁶. When the weight-average molecular weight of the component comprised in the polyolefin-based polymer is 1,000,000 or more, the strength of the separator comprising the polyolefin porous film may be improved.

The polyolefin-based polymer may comprise a thermoplastic polymer. The thermoplastic polymer may comprise a homopolymer (for example, polyethylene, polypropylene, polybutene) formed by polymerizing monomers such as ethylene, propylene, 1-butene, 4-methyl-1-pentene, and 1-hexene, or a copolymer (for example, an ethylene-propylene copolymer).

The polyolefin-based film may be a layer comprising these polyolefin-based polymers alone, or a layer comprising two or more of these polyolefin-based polymers. Among them, polyethylene, particularly high-molecular-weight polyethylene having ethylene as a main skeleton, can block (shut down) the flow of an excessive current at a lower temperature. In addition, the polyolefin-based film may further comprise components other than the polyolefin-based polymer that do not impair the function of the film.

As described above, the inner layer may comprise inorganic particles to impart functions such as heat resistance to the separator.

The inorganic particle may have one or more properties of lithium ion conductive ability, piezoelectricity, and flame retardancy.

The lithium ion conductive inorganic particle may comprise lithium but does not store lithium and may exhibit a function of moving lithium ions. There may be a kind of defect inside the lithium ion conductive inorganic particle. A charge carrier such as a lithium ion may move using the defect. Accordingly, the lithium ion conductive inorganic particle can improve the lithium ion conductivity in the battery. As a result, the performance of the battery can also be improved.

The lithium ion conductive inorganic particle may comprise one or more selected from the group consisting of LiₓTi_{y}(PO₄)₃ (0<x<2, 0<y<3), LiₓAl_{y}Ti_{z}(PO₄)₃ (0<x<2, 0<y<1, 0<z<3), LiₓLa_{y}TiO₃ (0<x<2, 0<y<3), and Li₇La₃Zr₂O₁₂.

The piezoelectric inorganic particle is a material that exhibits different electrical conductivity according to the applied pressure. Specifically, the piezoelectric inorganic particle is a non-conductor at atmospheric pressure and becomes an electrical conductor when a certain pressure is applied. The permittivity of the piezoelectric inorganic particle is relatively high. The dielectric constant of the piezoelectric inorganic particle may be 100 or more. When the piezoelectric inorganic particle is stretched or compressed under a certain pressure, electric charges may be generated. One side of the piezoelectric inorganic particle is positively charged and the other side is negatively charged, so that a potential difference may occur in the piezoelectric inorganic particle. When a short circuit occurs inside the positive electrode and the negative electrode due to an external impact, the piezoelectric inorganic particle disposed in the separator can prevent physical contact between the positive electrode and the negative electrode. The above potential difference may apply a minute current between the positive electrode and the negative electrode. This minute current can gently lower the voltage of the battery upon occurrence of a short circuit of the battery, thereby improving the safety of the battery.

The piezoelectric inorganic particle may comprise one or more selected from the group consisting of BaTiO₃, BaSO₄, Pb(Zr,Ti)O₃ (PZT), Pb₁₋ₓLaₓZr_{1-y}Ti_{y}O₃ (PLZT) (0<x<1, 0<y<1), Pb(Mg_{1/3}Nb_{2/3})O₃-PbTiO₃ (PMN-PT), and HfO₂ (hafnia).

The flame-retardant inorganic particle can impart flame retardant properties to the separator and can prevent a rapid rise in the internal temperature of the battery.

The flame-retardant inorganic particle may comprise one or more selected from the group consisting of SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, Al₂O₃, AlOOH, Al(OH)₃, and TiO₂.

The inorganic particle content of the inner layer may be 80 wt% or more. The inorganic particle content [wt%] of the inner layer may be within a range of 85 to 99, 85 to 98, 85 to 97, 85 to 96, 85 to 95, 90 to 98, 90 to 97, 90 to 96, or 90 to 95.

The inorganic particles may form an interstitial volume in the inner layer. The interstitial volume may refer to a void formed by the shape of the inorganic particles when the inorganic particles are densely positioned in the inner layer. The interstitial volume may provide a path through which a metal ion (e.g., a lithium ion) that operates the battery moves.

When the inner layer in the battery separator comprises inorganic particles, the outer layer may not comprise inorganic particles. The inorganic particle content of the outer layer may be, for example, 1 wt% or less, 0.5 wt% or less, 0.1 wt% or less, 0.01 wt% or less, or 0.001 wt% or less.

The inner layer may further comprise a binder. The inner layer may comprise a third binder, and the third binder may bond the inorganic particle(s) and may bond the inner layer to the substrate layer or the outer layer.

The third binder may exhibit a specific form in the inner layer or the inner layer coating liquid. The third binder may be dispersed in the inner layer coating liquid to become a particulate binder. Further, the third binder may be dissolved in the inner layer coating liquid to become a non-particulate binder.

The third binder may be an acrylic binder.

In this document, the acrylic binder may comprise a polymer comprising, as a main component, a polymerized unit derived from a (meth)acryloyl group-containing compound such as a (meth)acrylate and a (meth)acrylamide.

The acrylic binder may comprise a polymerized unit derived from a monomer comprising one or more selected from the group consisting of (meth)acrylamide, butyl(meth)acrylate, 2-ethylhexyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-ocsyl(meth)acrylate, isooctyl(meth)acrylate, isononyl(meth)acrylate, lauryl(meth)acrylate, and tetra decyl(meth)acrylate.

The inner layer may further comprise a dispersant. The dispersant can improve the dispersibility of the inorganic particles in the inner layer.

The first dispersant may comprise one or more selected from the group consisting of an acrylic copolymer; cyanoethyl polyvinyl alcohol; phenolic compounds comprising baicalin, luteolin, taxifolin, myricetin, quercetin, rutin, catechin, epigallocatechin gallate, butein, piceatannol, and tannic acid; and fatty acid-based compounds comprising pyrogallic acid, amylose, amylopectin, and xanthan gum.

The acrylic copolymer comprised in the dispersant may comprise one or more functional groups selected from the group consisting of an OH group, a COOH group, a CN group, an amine group, and an amide group.

The acrylic copolymer comprised in the dispersant may comprise one or more selected from the group consisting of an ethyl acrylate-acrylic acid-N,N-dimethylacrylamide copolymer, an ethyl acrylate-acrylic acid-2-(dimethylamino)ethyl acrylate copolymer, an ethyl acrylate-acrylic acid-N,N-diethylacrylamide copolymer, and an ethyl acrylate-acrylic acid-2-(diethylamino)ethyl acrylate copolymer.

The thickness of the inner layer may be within a range of 1 µm to 5 µm. The thickness of the inner layer may be 1.5 µm or more, or 2 µm or more. The thickness of the inner layer may be 4.5 µm or less, 4.0 µm or less, 3.5 µm or less, 3.0 µm or less, or 2.5 µm or less.

Another embodiment of the present invention is a battery.

The battery comprises: a positive electrode; a negative electrode; and a separator positioned between the positive electrode and the negative electrode.

The separator may be the battery separator of the present invention. Therefore, this document can apply the description of the battery separator of the present invention as it is to the description of the battery of the present invention.

As a result, the battery of the present invention can exhibit excellent durability and electrical performance.

An electrode of the battery may comprise an electrode active material attached to an electrode current collector.

Among the electrode active materials, the positive electrode active material may comprise a lithium intercalation material. The lithium intercalation material may comprise a lithium transition metal oxide. The lithium intercalation material may comprise one or more selected from the group consisting of lithium manganese oxide, lithium cobalt oxide, lithium nickel oxide, and lithium iron oxide, lithium nickel-manganese oxide, lithium nickel-cobalt oxide, and lithium nickel-manganese-cobalt oxide.

Among the electrode active materials, the negative electrode active material may comprise a lithium intercalation material. The lithium intercalation material may comprise one or more selected from the group consisting of lithium-based metals comprising lithium metal and lithium alloy; carbon-based compounds comprising carbon, petroleum coke, activated carbon, and graphite; and silicon-based compounds such as silicon carbide, silicon oxide, silicon-carbon composite, and silicon nanoparticle.

The positive electrode current collector may be a metal foil comprising one or more selected from the group consisting of aluminum and nickel.

The negative electrode current collector may be a metal foil comprising one or more selected from the group consisting of copper, gold, and nickel.

The battery may further comprise an electrolyte solution.

The electrolyte solution may comprise a non-aqueous solvent and a lithium salt. The lithium salt may be dissolved in the non-aqueous solvent.

The non-aqueous solvent may refer to an organic solvent that does not comprise water or contains a trace amount of water even if water is contained. The non-aqueous solvent may comprise a carbonate-based solvent, an ether-based solvent, an ester-based solvent, a polar functional group-containing solvent, or a mixture thereof.

The carbonate-based solvent may comprise one or more selected from the group consisting of propylene carbonate (PC), ethylene carbonate (EC), diethyl carbonate (DEC), dimethyl carbonate (DMC), dipropyl carbonate (DPC), and ethyl methyl carbonate (EMC).

The ether-based solvent may comprise one or more selected from the group consisting of dimethoxyethane, diethoxyethane, and tetrahydrofuran.

The ester-based solvent may comprise one or more selected from the group consisting of N-methyl-2-pyrrolidone (NMP) and gamma-butyrolactone (γ-butyrolactone).

The polar functional group-containing solvent may comprise one or more selected from the group consisting of dimethyl sulfoxide and acetonitrile.

The ionic salt may have a structure of A⁺B⁻. In the structure, A⁺ may comprise an alkali metal cation such as Li⁺, Na⁺, and K⁺. In the structure, B⁻ may comprise an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, and C(CF₂SO₂)₃⁻.

### MODE FOR CARRYING OUT INVENTION

Hereinafter, the present disclosure is described in more detail with Examples and Comparative Examples. However, the present disclosure is not limited to the Examples.

### Example 1. Battery Separator

A battery separator was manufactured according to the following sequence.
(1) The substrate layer is a polyethylene film (B09PJ1 of Toray) having a thickness of 9.0 µm.
(2) The inner layer coating liquid is an aqueous coating liquid of inorganic particle (Al₂O₃; AES-11 of Sumitomo) : binder (acrylic binder; CSB-130 of Toyo) : dispersant (1220 of Daicel) at a weight ratio of 96:2:2.
(3) The outer layer coating liquid is a mixture of first binder : second binder at a weight ratio of 4:1. The first binder is Solef 2042 of Solvay, which is an aqueous emulsion comprising PVDF-HFP having a melting point of 140 °C, a particle size (D50) of about 290 nm, a pH of about 7.5, and a VDF:HFP weight ratio of 93.3:6.7. The second binder is SNB-007 of Eco Chemical, which is a polyvinyl acetate aqueous emulsion having a weight-average molecular weight of 100,000 to 150,000, a particle size (D50) of 200 to 500 nm, and a glass transition temperature of 38 °C.
(4) The inner layer coating liquid is applied and dried on both surfaces of the substrate layer. An inner layer having a thickness of 2 µm per layer is positioned on the substrate layer.
(5) The outer layer coating liquid is applied and dried on the inner layer. An outer layer having a thickness of 1 µm per layer is positioned on the inner layer. A battery separator is obtained.

### Example 2. Battery Separator

The same procedure as Example 1 is repeated, except that, in the above (3), BH-S of Sekisui, which is a polyvinyl butyral (PVB) powder having a weight-average molecular weight of about 50,000 and a glass transition temperature of 60 °C, is used instead of SNB-007 of Eco Chemical as the second binder. A battery separator is obtained.

### Example 3. Battery Separator

The same procedure as Example 1 is repeated, except that, in the above (3), BD60 of San Nopco, which is a polyvinyl alcohol aqueous solution having a weight-average molecular weight of 150,000 g/mol and a glass transition temperature of 60 °C, is used instead of SNB-007 of Eco Chemical as the second binder. A battery separator is obtained.

### Example 4. Battery Separator

The same procedure as Example 1 is repeated, except that, in the above (3), KX-1 of Sekisui, which is a polyvinyl pyrrolidone powder having a degree of polymerization of about 600 and a glass transition temperature of 60 °C, is used instead of SNB-007 of Eco Chemical as the second binder. A battery separator is obtained.

### Comparative Example. Battery Separator

The same procedure as Example 1 is repeated, except that, in the above (3), the outer layer coating liquid is composed of the first binder alone. A battery separator is obtained.

### [Evaluation Methods]

### 1. Outer Layer Coating Amount

The coating amount of the outer layer was calculated as the value obtained by subtracting the weight per unit area (g/m²) of the laminate before forming the outer layer (the laminate of the substrate layer and the inner layer) from the weight per unit area (g/m²) of the finally manufactured separator.

### 2. Air Permeability of Separator

The measurement standard for the air permeability of the separator is JIS P-8117. The air permeability measurement equipment is a Gurley-type air permeability meter. The air permeability is measured by the time taken for 100 cc of air to pass through a separator having a diameter of 28.6 mm and an area of 645 mm².

### 3. Peel Strength

The peel strength of the separators manufactured in Examples and Comparative Example was measured according to the following procedure.
(1) A sample is prepared by cutting the separator into a size of 25 mm × 100 mm.
(2) A specimen is prepared by attaching a glass substrate and the sample with a double-sided adhesive tape (Scotch 665 of 3M). In this specimen, the outer layer is attached to the glass substrate with the adhesive tape.
(3) This specimen is mounted on a UTM apparatus (Instron Inc.). A bidirectional force is applied to the specimen at a speed of 300 mm/min, and the force [gf/25mm] required for the attached specimen to be separated from the glass substrate at a peel angle of 180 degrees was measured as the peel strength. The peel strength is measured three times, and the result is summarized as a number-average value according to the number of measurements.

### 4. Negative Electrode Dry Adhesion of Separator

(1) A slurry obtained by mixing natural graphite and an aqueous binder at a weight ratio of 92:8 is coated and rolled on a copper foil (current collector) to prepare an electrode (negative electrode). The area of the negative electrode is 100 mm × 25 mm.
(2) The separators of Examples and Comparative Example are cut into a size of 150 mm × 25 mm and then disposed on the electrode. Subsequently, a pressure of 6.5 MPa is applied to the separator for 1 second under a temperature condition of 60 °C. A specimen in which the separator is laminated on the electrode is obtained.
(3) This specimen is mounted on a UTM apparatus (Instron Inc.). A bidirectional force is applied to the specimen at a speed of 300 mm/min, and the force required for the separator to be separated from the electrode at a peel angle of 180 degrees was measured as the negative electrode adhesion. The negative electrode adhesion is measured three times, and the result is summarized as a number-average value according to the number of measurements.

### 5. Resistance of Separator

The resistance of the separator was measured according to the following procedure.
(1) The battery separator is punched to fit the size of the coin cell case.
(2) The punched battery separator is housed in the coin cell case.
(3) An electrolyte solution is injected into the coin cell case. The electrolyte solution is one in which LiPF₆ at a concentration of 1.2 M is dissolved in a mixed solvent of ethylene carbonate : ethyl methyl carbonate at a volume ratio of 3:7.
(4) The coin cell case is completely sealed with a press. Subsequently, it is aged at room temperature for 3 hours. An electrical resistance measurement specimen is manufactured.
(5) The impedance by frequency of the specimen is plotted by electrochemical impedance spectroscopy (EIS). The impedance spectroscopy is performed using a 1470E cell test system and a Frequency response analyzer 1255B of Solaton at a temperature of 25 °C and a frequency of 100000 Hz to 10000 Hz.
(6) The resistance of the separator was determined as the real part (x-intercept) of the impedance.

### 6. SEM Photographing

Surface SEM photographs of the battery separator were taken using a SU3900 instrument of Hitachi Inc. The photographing specimen was pretreated by a 30-second platinum sputtering method.

### [Results and Discussion]

Evaluation results for Examples and Comparative Example are shown in Table 1 below.

**[Table 1]**

| | Unit | Comparative Example | Example | Example | Example | Example |
|---|---|---|---|---|---|---|
| | Unit | Comparative Example | 1 | 2 | 3 | 4 |
| Thickness | um | 12.0 | 13.0 | 12.2 | 12.0 | 12.1 |
| Outer layer coating amount | g/m2 | 0.5 | 0.5 | 0.4 | 0.5 | 0.5 |
| Air permeability | sec/100cc | 85 | 72 | 78 | 100 | 85 |
| Peel strength | gf/15mm | 100 | 90 | 121 | 180 | 127 |
| Negative electrode adhesion | gf/25mm | 5 | 40 | 33 | 24 | 43 |
| Resistance | ohm | 0.54 | 0.48 | 0.51 | 0.53 | 0.51 |

Referring to Table 1, it can be confirmed that only the separators of Examples 1 to 4 have excellent air permeability, peel strength, negative electrode adhesion, and resistance at a low coating amount (0.5 g/m²).

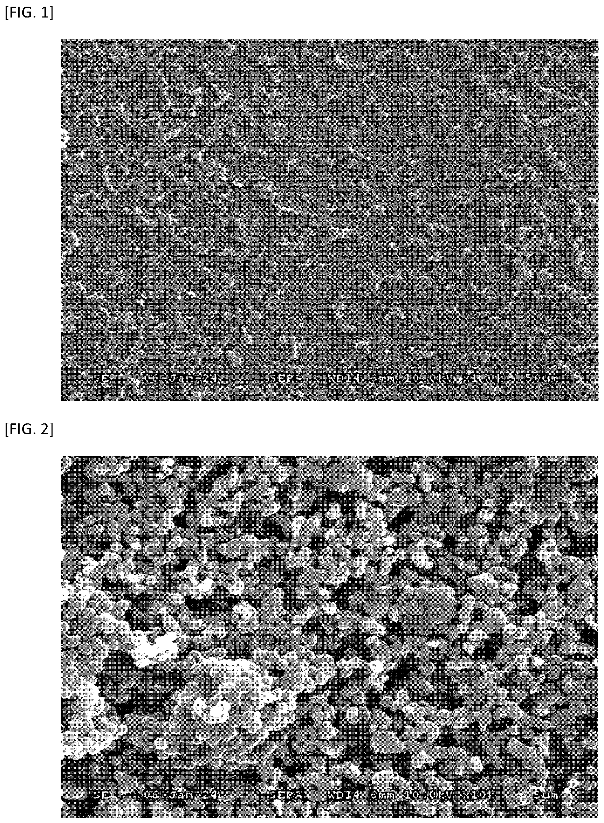

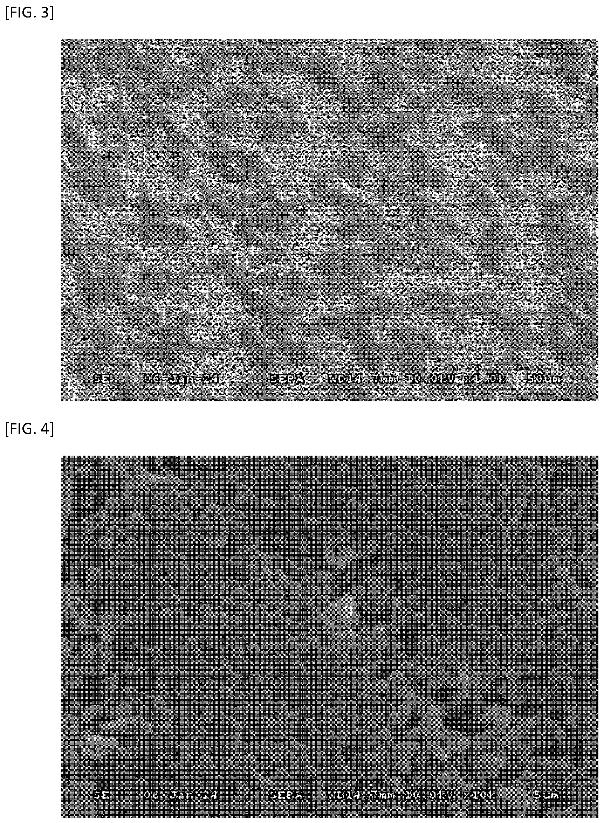

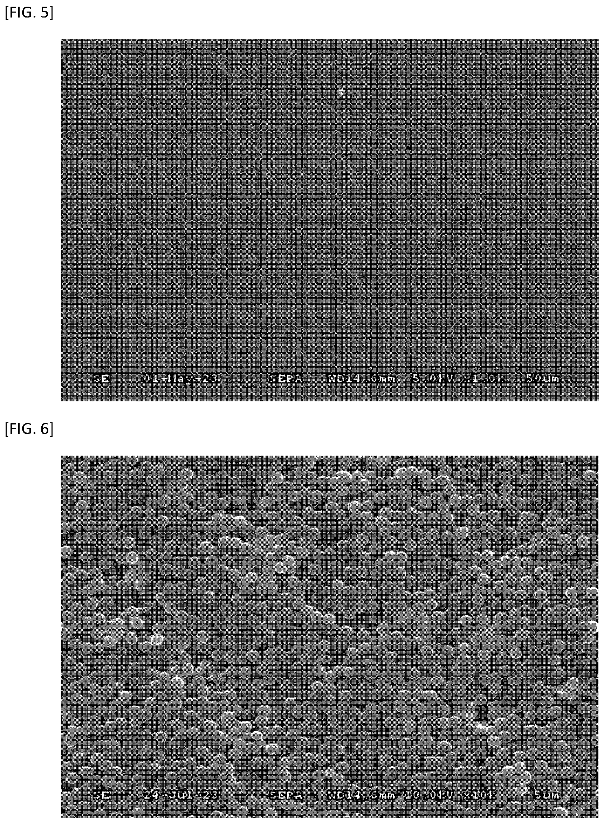

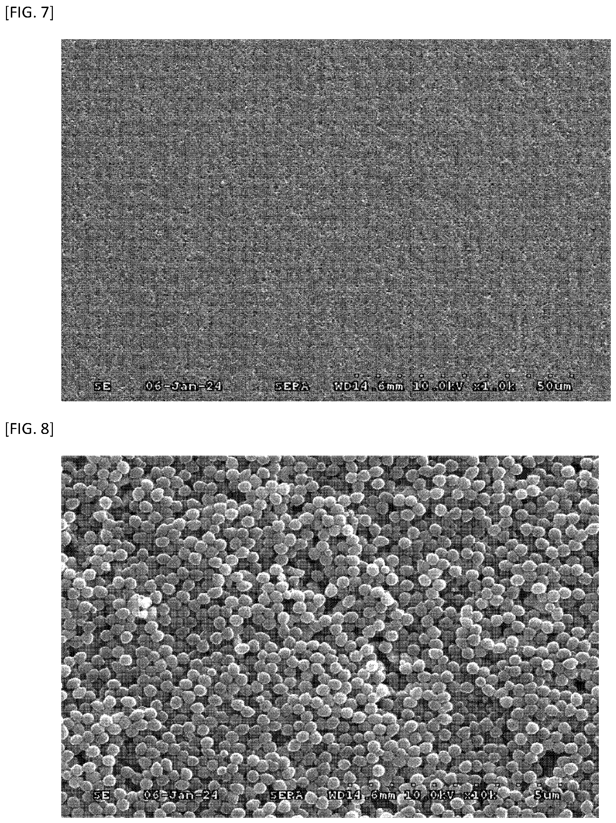

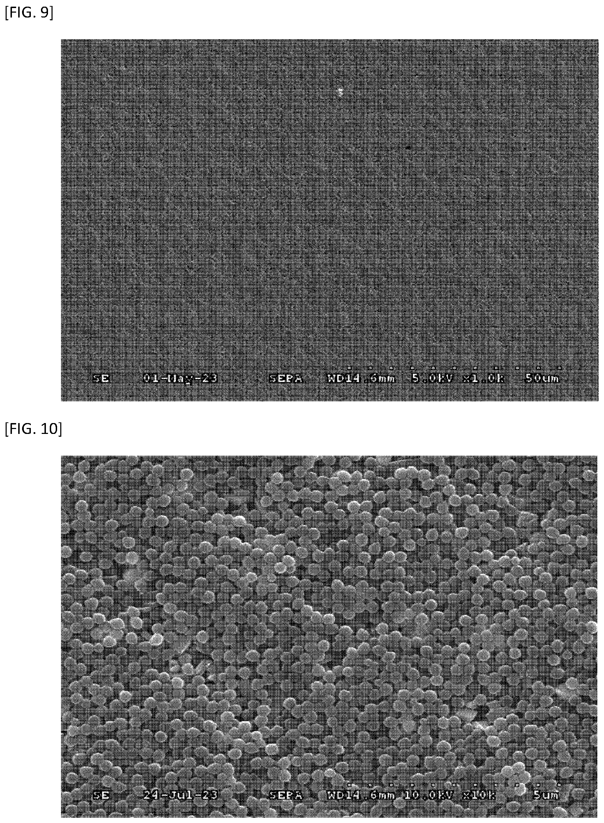

FIGS. 1 to 10 are surface SEM photographs of the battery separators of Examples and Comparative Example.

Referring to FIGS. 1 to 10 and Table 1, it is confirmed that, particularly in the outer layer of Examples 1 and 2, the second binder is positioned closer to the inner layer than the first binder, and the first binder protrudes outward. Through this, it can be seen that the outer layer of Examples 1 and 2 comprises a sea-island structure, so that the air permeability and electrical resistance of the battery separator and the performance of the battery accordingly can be improved.

In addition, referring to FIGS. 1to 10 and Table 1, although there is no difference in the appearance of the outer layer between Examples 3 and 4 and Comparative Example, it can be seen that the combination of binders comprised in the outer layer of Examples 3 and 4 can significantly improve the peel strength of Examples 3 and 4.

## Claims

1. A battery separator comprising:
a substrate layer;
an outer layer positioned on one surface or both surfaces of the substrate layer, and comprising a first binder which is a fluorine-based binder and a second binder which is a vinyl-based binder; and
an inner layer positioned between the substrate layer and the outer layer, and comprising inorganic particles;
wherein a ratio (P1:P2) of a first binder content (P1) of the battery separator and a second binder content (P2) of the battery separator is within a range of 0.5:1 to 5:1.

2. The battery separator of claim 1, wherein the outer layer comprises a sea-island structure.

3. The battery separator of claim 2, wherein the first binder forms an island of the sea-island structure, and the second binder forms a sea of the sea-island structure.

4. The battery separator of claim 1, wherein a peel strength of the inner layer with respect to the substrate layer is 125 gf/25mm or more.

5. The battery separator of claim 1, wherein the first binder comprises a PVDF-based binder.

6. The battery separator of claim 1, wherein the first binder comprises PVDF-HFP.

7. The battery separator of claim 1, wherein the first binder comprises PVDF-HFP having an HFP substitution ratio of 10 wt% or less.

8. The battery separator of claim 1, wherein the first binder is a particulate binder.

9. The battery separator of claim 1, wherein an average size of the first binder is within a range of 100 nm to 800 nm.

10. The battery separator of claim 1, wherein the second binder is a non-particulate binder.

11. The battery separator of claim 1, wherein the second binder is a particulate binder.

12. The battery separator of claim 11, wherein an average size of the second binder is within a range of 0.1 µm to 2.0 µm.

13. The battery separator of claim 1, wherein the second binder comprises a homopolymer comprising a polymerized unit derived from a vinyl-based monomer.

14. The battery separator of claim 13, wherein the vinyl-based monomer comprises one or more selected from the group consisting of vinyl alcohol, vinyl butyral, vinyl pyrrolidone, and vinyl acetate.

15. The battery separator of claim 13, wherein the vinyl-based monomer comprises one or more selected from the group consisting of vinyl butyral and vinyl acetate.

16. The battery separator of claim 13, wherein the vinyl-based monomer comprises one or more selected from the group consisting of vinyl alcohol and vinyl pyrrolidone.

17. The battery separator of claim 1, wherein the second binder is positioned closer to the inner layer compared to the first binder.

18. The battery separator of claim 1, wherein the outer layer does not comprise inorganic particles.

19. The battery separator of claim 1, wherein an inorganic particle content of the inner layer is 80 wt% or more.

20. A battery comprising: a positive electrode; a negative electrode; and a separator positioned between the positive electrode and the negative electrode,
wherein the separator comprises a substrate layer; an outer layer positioned on one surface or both surfaces of the substrate layer and comprising a first binder which is a fluorine-based binder and a second binder which is a vinyl-based binder; and an inner layer positioned between the substrate layer and the organic layer and comprising inorganic particles,
wherein a ratio (P1:P2) of a first binder content (P1) of the separator to a second binder content (P2) of the separator is within a range of 0.5:1 to 5:1.
